(19) Europäisches Patentamt
European Patent Office
Office européen des brevets

(11) **EP 4 564 912 A1**

(12) **EUROPEAN PATENT APPLICATION**
published in accordance with Art. 153(4) EPC

(43) Date of publication:
**04.06.2025 Bulletin 2025/23**

(21) Application number: **23848987.6**

(22) Date of filing: **15.05.2023**

(51) International Patent Classification (IPC):
**H04W 36/00** (2009.01)

(52) Cooperative Patent Classification (CPC):
**H04W 36/00; H04W 36/08; H04W 36/18**

(86) International application number:
**PCT/CN2023/094350**

(87) International publication number:
**WO 2024/027277 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.07.2022 CN 202210911479**

(71) Applicant: **Huawei Technologies Co., Ltd.
Shenzhen, Guangdong 518129 (CN)**

(72) Inventors:
• SUN, Fei
  Shenzhen, Guangdong 518129 (CN)
• ZHU, Yuanping
  Shenzhen, Guangdong 518129 (CN)
• SHI, Yulong
  Shenzhen, Guangdong 518129 (CN)
• ZHU, Shichao
  Shenzhen, Guangdong 518129 (CN)

(74) Representative: **Gill Jennings & Every LLP
The Broadgate Tower
20 Primrose Street
London EC2A 2ES (GB)**

(54) **CELL IDENTIFIER CONFIGURATION METHOD AND COMMUNICATION APPARATUS**

(57) Embodiments of this application relate to the field of communication technologies, and provide a cell identity configuration method and a communication apparatus. The method includes: A donor node obtains a cell identity of a neighboring cell of a current first cell, where the first cell is a serving cell of a first integrated access backhaul IAB node. If determining that a cell identity of the first cell is the same as the cell identity of the neighboring cell, the donor node activates a second cell, and hands over a mobile terminal from the first cell to the second cell, where a cell identity of the second cell is different from the cell identity of the neighboring cell, and the second cell is a cell other than the first cell of the first IAB node. Through cell identity configuration in this manner, a cell identity conflict between an IAB cell and a neighboring cell present when the IAB cell moves can be avoided, and service stability of the IAB node and the mobile terminal can be ensured, ensuring service experience of the mobile terminal. In addition, in this manner, a cell identity of a current serving cell does not need to be reconfigured, avoiding an interrupted connection when the mobile terminal re-accesses a network.

FIG. 7

**Description**

CROSS-REFERENCE TO RELATED APPLICATIONS

This application claims priority to Chinese Patent Application No. 202210911479.9, filed with the China National Intellectual Property Administration on July 30, 2022 and entitled "CELL IDENTITY CONFIGURATION METHOD AND COMMUNICATION APPARATUS", which is incorporated herein by reference in its entirety.

TECHNICAL FIELD

Embodiments of this application relate to the field of communication technologies, and in particular, to a cell identity configuration method and a communication apparatus.

BACKGROUND

A physical cell identifier (physical cell identifier, PCI) is a parameter used for indicating a cell in a 5th generation (5th generation, 5G) mobile communication system. Each cell corresponds to one PCI. Based on a preconfigured PCI, operations such as synchronization, signal demodulation, and signal switching of downlink signals of different cells may be performed. Generally, a location of a cell is fixed, and a PCI configured for the cell is also fixed.

However, to reduce optical fiber deployment and deployment costs, an integrated access and backhaul (integrated access and backhaul, IAB) network technology is introduced in the 5G mobile communication system. A location of an IAB node in an IAB network is not fixed, and a cell of the IAB node may move flexibly. For example, a location of the cell changes as a vehicle moves. If a PCI of the cell of the IAB node is still preconfigured as a fixed value, a signal collision may occur in cells configured with the same PCI as the PCI of the cell of the IAB node due to a location change of the IAB node. Therefore, an existing PCI preconfiguration method is not applicable.

SUMMARY

This application provides a cell identity configuration method and a communication apparatus, to adapt to a requirement of a moving cell, and avoid a cell signal collision.

According to a first aspect, this application provides a cell identity configuration method. The method may be performed by a central unit of an IAB donor node, that is, a donor CU. The donor node obtains a cell identity of a neighboring cell of a current first cell. The first cell is a serving cell of a first IAB node. If determining that a cell identity of the first cell is the same as the cell identity of the neighboring cell, the donor node activates a second cell, and hands over a mobile terminal from the first cell to the second cell. A cell identity of the second cell is different from the cell identity of the neighboring cell, and the second cell is a cell other than the first cell of the first IAB node.

In this application, the donor node obtains the cell identity of the neighboring cell of the serving cell of the IAB node. When determining that the cell identity of the neighboring cell is the same as the cell identity of the serving cell, in other words, a conflict exists, the donor node activates the second cell of the IAB node, and may hand over a terminal of a previous serving cell to the second cell to receive a service. Through cell identity configuration in this manner, a cell identity conflict between an IAB cell and a neighboring cell present when the IAB cell moves can be avoided, and service stability of the IAB node and the mobile terminal can be ensured, ensuring service experience of the mobile terminal. In addition, in this manner, a cell identity of a current serving cell does not need to be reconfigured, avoiding an interrupted connection when the mobile terminal re-accesses a network.

In an optional manner, that the cell identity of the first cell is the same as the cell identity of the neighboring cell includes one or more of the following:

the first cell and the neighboring cell use a same cell identity; or
a remainder obtained by the cell identity of the first cell modulo N is the same as a remainder obtained by the cell identity of the neighboring cell modulo N, where N is 3 or 30.

In this application, that the cell identity of the first cell is determined to be the same as the cell identity of the neighboring cell may mean that a same cell identity is used, or may mean that the cell identities are the same after a modulo operation is performed on the cell identities. In this manner, more cell identities that conflict with the cell identity of the first cell can be found, ensuring quality of service of the mobile terminal in the cell.

In an optional manner, the cell identity includes one of the following: a PCI and a cell global identifier (cell global identifier, CGI).

According to a second aspect, this application provides a cell identity configuration method. The method may be performed by an IAB node. A first IAB node obtains a cell identity of a neighboring cell of a current first cell. The first cell is a serving cell of the first IAB node. The first IAB node determines that a cell identity of the first cell is the same as the cell identity of the neighboring cell, and updates the cell identity of the first cell. An updated cell identity of the first cell is different from the cell identity of the neighboring cell.

In this application, the IAB node determines that a cell identity of a serving cell and a cell identity of a neighboring cell of a current mobile terminal are the same. To ensure quality of service of the mobile terminal, the IAB node directly updates the cell identity of the current serving cell, so that the cell identity of the serving cell does not conflict with the cell identity of the neighboring cell. This cell identity configuration manner is intuitive and is easy to operate, and can ensure service experience of the mobile terminal.

In an optional manner, the updating the cell identity of the first cell includes: The first IAB node sends the cell identity of the first cell to a donor node; and the first IAB node receives the updated cell identity of the first cell from the donor node.

In this application, when it is determined to update the cell identity of the first cell, the updated cell identity of the first cell may also be obtained from the donor node, and the IAB node does not need to perform configuration by itself. In this manner, a data processing amount of the IAB node can be reduced, and data processing efficiency can be improved.

In an optional manner, that the cell identity of the first cell is the same as the cell identity of the neighboring cell includes one or more of the following:

the first cell and the neighboring cell use a same cell identity; or

a remainder obtained by the cell identity of the first cell modulo N is the same as a remainder obtained by the cell identity of the neighboring cell modulo N, where N is 3 or 30.

In this application, that the cell identity of the first cell is determined to be the same as the cell identity of the neighboring cell may mean that a same cell identity is used, or may mean that the cell identities are the same after a modulo operation is performed on the cell identities. In this manner, more cell identities that conflict with the cell identity of the first cell can be found, ensuring quality of service of the mobile terminal in the cell.

In an optional manner, the cell identity includes one of the following: a PCI and a CGI.

According to a third aspect, this application provides a cell identity configuration method. The method may be performed by an IAB node. A first IAB node obtains a correspondence. The correspondence includes correspondences between different parameter values of a first parameter and different cell identities, and the first parameter includes at least one of the following: a service area or a service time. The first IAB node determines a target parameter value of the first parameter. The first IAB node determines a corresponding target cell identity based on the correspondence and the target parameter value of the first parameter, and configures the target cell identity for a first cell. The first cell is any cell of the first IAB node.

In this application, to avoid a conflict with a cell identity of a cell managed by the IAB node and a cell identity of a neighboring cell, the IAB node may configure a cell identity for the cell based on the service area, the service time, or the like, to ensure that the cell identity is globally unique. In this manner, quality of service of a mobile terminal can be ensured, so that a cell identity of a serving cell does not conflict with a cell identity of a neighboring cell, and service experience of the mobile terminal can be ensured.

In an optional manner, the first IAB node determines a first service area based on a current location of the first IAB node, and uses area information of the first service area as the target parameter value of the first parameter; the first IAB node determines a first service time based on a current time, and uses the first service time as the target parameter value of the first parameter; or the first IAB node determines a second service area based on a current location of the first IAB node, and determines a second service time based on a current time. The first IAB node determines area information of the second service area and the second service time as the target parameter value of the first parameter.

The target parameter value of the first parameter determined in this manner may be flexible, accurate, and reliable.

In an optional manner, the cell identity includes one of the following: a PCI and a CGI.

According to a fourth aspect, an embodiment of this application provides a communication apparatus. The communication apparatus may be a receiving device or a chip disposed in a receiving device, or may be a sending device or a chip disposed in a sending device. The communication apparatus has a function for implementing the first aspect, the second aspect, or the third aspect. For example, the communication apparatus includes a corresponding module, unit, or means (means) for performing steps according to any one of the first aspect, a corresponding module, unit, or means for performing steps according to any one of the second aspect, or a corresponding module, unit, or means for performing steps according to any one of the third aspect. The function, unit, or means may be implemented by software or hardware, or may be implemented by performing corresponding software by hardware.

In a possible design, the communication apparatus includes a processing unit and a transceiver unit. The transceiver unit may be configured to send and receive a signal, to implement communication between the communication apparatus and another apparatus. For example, the transceiver unit is configured to obtain a cell identity of a neighboring cell of a first cell. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

**In** another possible design, the communication apparatus includes a processor, and may further include a transceiver. The transceiver is configured to receive and send a signal, and the processor executes a program instruction to complete the method according to any one of possible designs or implementations of the first aspect or the second aspect. The communication apparatus may further include one or more memory. The memory is configured to be coupled to the processor. The memory may store a computer program or instructions necessary for implementing the function according to the first aspect, the second aspect, or the third aspect. The processor may execute the computer program or instructions stored in the memory. When the computer program or the instructions is/are executed, the communication apparatus is enabled to implement the method according to any one of the possible designs or implementations of the first aspect, the second aspect, or the third aspect.

**In** another possible design, the communication apparatus includes a processor. The processor may be configured to be coupled to a memory. The memory may store a computer program or instructions necessary for implementing the function according to the first aspect, the second aspect, or the third aspect. The processor may execute the computer program or instructions stored in the memory. When the computer program or the instructions is/are executed, the communication apparatus is enabled to implement the method according to any one of the possible designs or implementations of the first aspect, the second aspect, or the third aspect.

**In** another possible design, the communication apparatus includes a processor and an interface circuit. The processor is configured to communicate with another apparatus via the interface circuit, and perform the method according to any one of the possible designs or implementations of the first aspect, the second aspect, or the third aspect.

It may be understood that in the fourth aspect, the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. **In** addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a chip system. The chip system includes a processor, and may further include a memory, and is configured to implement the method according to any one of the possible designs of the first aspect, the second aspect, or the third aspect. The chip system may include a chip, or may include a chip and another discrete component.

According to a sixth aspect, this application further provides a computer-readable storage medium. The computer-readable storage medium stores computer-readable instructions. When the computer-readable instructions are run on a computer, the computer is enabled to perform the method according to any one of the possible designs of the first aspect, the second aspect, or the third aspect.

According to a seventh aspect, this application provides a computer program product including instructions. When the instructions are run on a computer, the computer is enabled to perform the method according to embodiments of the first aspect, the second aspect, or the third aspect.

For technical effects that can be achieved in the second aspect to the seventh aspect, refer to descriptions of technical effects that can be achieved in the corresponding possible design solutions in the first aspect. Details are not described herein again in this application.

BRIEF DESCRIPTION OF DRAWINGS

FIG. 1 is a diagram of a communication system according to an embodiment of this application;
FIG. 2A is a diagram of a user plane protocol stack of an IAB network;
FIG. 2B is a diagram of a control plane protocol stack of an IAB network;
FIG. 3 is a diagram of an IAB networking scenario;
FIG. 4A is a diagram of an IAB network architecture;
FIG. 4B is a diagram of another IAB network architecture;

FIG. 5 is a diagram of a mobile IAB node;

FIG. 6 is a diagram of a mobile IAB scenario;

FIG. 7 is a schematic flowchart of a cell identity configuration method according to an embodiment of this application;

FIG. 8A is a schematic flowchart of another cell identity configuration method according to an embodiment of this application;

FIG. 8B is a schematic flowchart of still another cell identity configuration method according to an embodiment of this application;

FIG. 9 is a diagram of another mobile IAB scenario;

FIG. 10 is a schematic flowchart of a cell identity configuration method according to an embodiment of this application;

FIG. 11 is a schematic flowchart of another cell identity configuration method according to an embodiment of this application;

FIG. 12 is a schematic flowchart of still another cell identity configuration method according to an embodiment of this application;

FIG. 13 is a schematic flowchart of yet another cell identity configuration method according to an embodiment of this application;

FIG. 14 is a schematic flowchart of still yet another cell identity configuration method according to an embodiment of this application;

FIG. 15 is a diagram of a structure of a communication apparatus according to an embodiment of this application;

FIG. 16 is a diagram of a structure of a communication apparatus according to an embodiment of this application; and

FIG. 17 is a diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more.

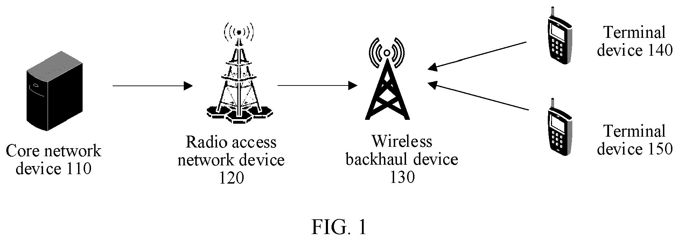

FIG. 1 is a diagram of an architecture of a communication system to which an embodiment of this application is applied. As shown in FIG. 1, the communication system includes a core network device 110, a radio access network device 120, a wireless backhaul device 130, and at least one terminal device (a terminal device 140 and a terminal device 150 are used as examples for description in FIG. 1). The terminal device is connected to the wireless backhaul device in a wireless manner, and is connected to the radio access network device by using one or more wireless backhaul devices. In addition, some terminal devices may also be directly connected to the radio access network device in a wireless manner. The radio access network device is connected to the core network device in a wireless or wired manner. The core network device and the radio access network device may be different physical devices that are independent of each other, functions of the core network device and logical functions of the radio access network device may be integrated into a same physical device, or a part of functions of the core network device and a part of functions of the radio access network device may be integrated into one physical device. This is not limited in this application. The terminal device may be located at a fixed position, or may be mobile. It should be understood that a mobile communication system shown in FIG. 1 is merely a diagram. The communication system may further include another network device, for example, may further include a wireless relay device or a wireless backhaul device, which is not shown in FIG. 1. Quantities of core network devices, radio access network devices, wireless backhaul devices, and terminal devices included in the mobile communication system are not limited in embodiments of this application.

The radio access network device is an access device that is used by the terminal device to access the mobile communication system in a wireless manner. The radio access network device may be a base station NodeB, an evolved base station eNodeB, a base station in a 5G mobile communication system, a base station in a future mobile communication system, an access node in a Wi-Fi system, or the like. A specific technology used by the radio access network device and a specific device form of the radio access network device are not limited in embodiments of this application. The terminal device may also be referred to as a terminal (terminal), UE, a mobile station (mobile station, MS), a mobile terminal (mobile terminal, MT), or the like.

The terminal device may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The wireless backhaul device may provide a backhaul service for a child node of the wireless backhaul device. Specifically, the child node may be a relay node in a long term evolution (long term evolution, LTE) system, an IAB node in a 5G system, or another device that can provide a wireless relay function. The radio access network device and the terminal device may be deployed on land, including an indoor or outdoor device, or a handheld or vehicle-mounted device; may be deployed on water; or may be deployed on an airplane, a balloon, and an artificial satellite in the air. Application scenarios of the radio access network device and the terminal device are not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. Communication between the radio access network device and the terminal device and communication between the terminal devices may be performed over a spectrum below 6 gigahertz (gigahertz, GHz), over a spectrum above 6 GHz, or over both a spectrum below 6 GHz and a spectrum above 6 GHz. Spectrum resources used by the radio access network device and the terminal device are not limited in embodiments of this application.

The foregoing network elements may be network elements implemented on dedicated hardware, software instances running on the dedicated hardware, or instances of virtualization functions on an appropriate platform. In addition, embodiments of this application are also applicable to another future-oriented communication technology. Network architectures and service scenarios described in this application are intended to describe the technical solutions in this application clearly, and do not constitute a limitation on the technical solutions provided in this application. A person of ordinary skill in the art may know that, with evolution of the network architectures and emergence of new service scenarios, the technical solutions provided in this application are also applicable to similar technical problems.

For ease of understanding embodiments of this application, the following first briefly describes terms in embodiments of this application.

(1) IAB network: Considering a small coverage area of a high frequency band, to ensure network coverage performance, network coverage is provided in some remote areas, but optical fiber deployment is difficult and costly. Therefore, a flexible and convenient access and backhaul solutions need to be designed. An IAB technology emerges. Both an access link (Access link) and a backhaul link (Backhaul link) in the IAB technology use a wireless transmission solution, avoiding optical fiber deployment and reducing device costs.

Multi-hop networking may be used in the IAB network. Considering a requirement of service transmission reliability, an IAB node may support dual connectivity (dual connectivity, DC) or multi-connectivity (multi-connectivity), to cope with a possible exception (for example, radio link outage or blockage (blockage) and load fluctuation) on the backhaul link, and improve transmission reliability assurance. Therefore, the IAB network may support multi-hop and multi-connection networking, and there may be a plurality of routing paths between a terminal device and a donor base station. On a path, there is a determined hierarchical relationship between IAB nodes and between an IAB node and a donor base station serving the IAB node. Each IAB node considers a node providing a backhaul service for the IAB node as a parent node. Correspondingly, each IAB node may be considered as a child node of the parent node.

It should be understood that radio link outage (outage) or radio link blockage (blockage) may cause radio link failure or congestion. For example, when a building blocks UE and an IAB donor node, radio link blockage may be caused between the UE and the IAB donor node. In a conventional technology, a main reason of the radio link failure is that a physical layer indicates that the radio link is faulty for more than specific duration, random access fails, or radio link control (radio link control, RLC) fails. It should be understood that the radio link failure may be caused by another reason. This is not limited in embodiments of this application. The radio link congestion may mean that an amount of uplink or downlink buffered data to be transmitted by an IAB node on a link exceeds a specific threshold.

The IAB node may include a mobile terminal (mobile termination, MT) part and a distributed unit (distributed unit, DU) part. When facing the parent node of the IAB node, the IAB node may be considered as a terminal device accessing the parent node, that is, a role of an MT. When facing the child node of the IAB node, the IAB node may be considered as a network device providing a backhaul service for the child node, that is, a role of a DU. The child node herein may be another IAB node or a terminal device.

The IAB donor node may be an access network element having a complete base station function, for example, a donor base station DgNB, or may be an access network element in which a central unit (central unit, CU) and a DU are separated. The IAB donor node is connected to a core network (for example, connected to a 5G core network) network element that serves the terminal device, and provides a wireless backhaul function for the IAB node. For ease of description, the central unit of the IAB donor node is briefly referred to as a donor CU, and the distributed unit of the IAB donor node is briefly referred to as a donor DU. The donor CU may alternatively be in the form in which a control plane (control plane, CP) is separated from a user plane (user plane, UP). For example, the CU may include one CU-CP and one CU-UP (or more CU-UPs).

In embodiments of this application, an access IAB node is an IAB node accessed by the terminal device, that is, an IAB node that provides a service for the terminal device. In an IAB uplink transmission process, the access IAB node transmits, to a target donor DU via one or more other IAB nodes, an uplink data packet sent by the terminal device, and then the target donor DU transmits the uplink data packet to a corresponding donor CU-UP. In an IAB downlink transmission process, if a data packet is sent to the terminal device, the donor CU-UP transmits, to a corresponding donor DU, a downlink data packet sent to the terminal device, and transmits the downlink data packet to an access IAB node corresponding to the terminal device via one or more other IAB nodes or over a direct backhaul link. The access IAB node transmits the received downlink data packet to the terminal device. If the data packet is sent to an IAB node, the donor CU-UP transmits, to the corresponding donor DU, the downlink data packet sent to the IAB node, and transmits the downlink data packet to a parent node of the IAB node via one or more other IAB nodes or over a direct backhaul link. The parent node of the IAB node then transmits the received downlink data packet to the IAB node.

It should be understood that, in the IAB downlink transmission process, if a node (referred to as a termination node for short below) at which a data packet finally arrives is the terminal device, a target node is an access IAB node corresponding to the terminal device. If the termination node is an IAB node, the target node is a parent node of the IAB node. In the IAB uplink transmission process, a termination node is a donor CU-UP, and a target node is a donor DU corresponding to the donor CU-UP. The target node may also be referred to as a target receiving node.

Therefore, in embodiments of this application, if the data packet is an uplink data packet, the target node is a donor DU, a first node is an access IAB node, or an intermediate IAB node (referred to as an intermediate IAB node) between the access IAB node and an IAB donor node, and a source node is an access IAB node. The access IAB node herein is an IAB node accessed by a terminal device that sends the uplink data packet. If the data packet is a downlink data packet sent to the terminal device, the target node is an access IAB node, the first node is a donor DU or an intermediate IAB node, and the source node is a donor DU. The access IAB node herein is a node accessed by a terminal device that receives the downlink data packet. Alternatively, if the data packet is the downlink data packet sent to the IAB node, the target node is a parent node of the IAB node, and the first node is a donor DU or an intermediate IAB node.

A backhaul adaptation protocol (backhaul adaptation protocol, BAP) layer is a new protocol layer introduced in the IAB network, and a main function of the backhaul adaptation protocol layer is to complete routing and bearer mapping in the IAB network. In a possible protocol architecture, the BAP layer exists on each of a DU side of the IAB donor node, the intermediate IAB node, and an MT side of the access IAB node, and the BAP layer is located above an RLC protocol layer. In addition, an MT and a DU of the intermediate IAB node may share one backhaul adaptation layer entity, or the MT and the DU may each have one backhaul adaptation layer entity.

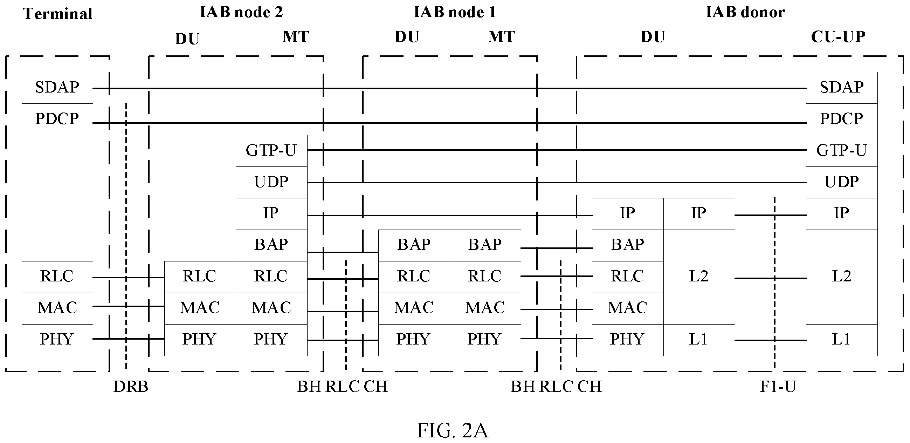

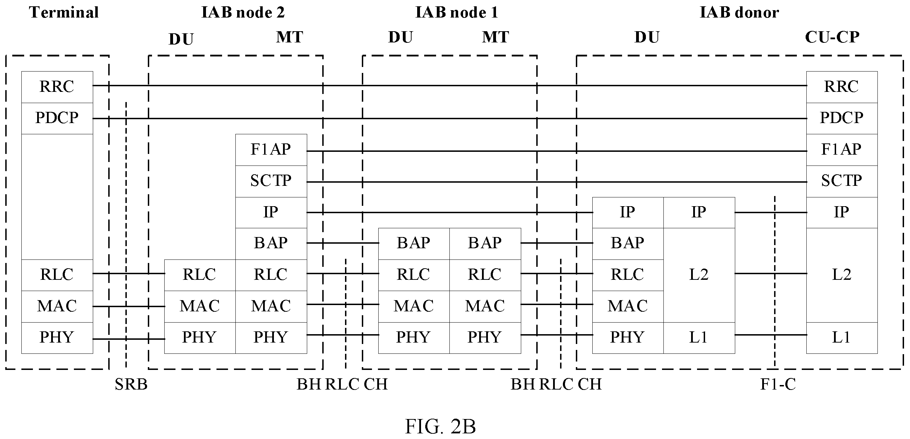

For example, further refer to FIG. 2A and FIG. 2B. FIG. 2A is a diagram of a user plane protocol architecture in an IAB network. FIG. 2B is a diagram of a control plane protocol architecture in an IAB network.

As shown in FIG. 2A, for a user plane, a Uu interface is established between a terminal and an IAB2-DU, and a peer-to peer protocol layer includes an RLC layer, a media access control (media access control, MAC) layer, and a physical (physical, PHY) layer. An F1-U interface is established between an IAB node (node) 2-DU and an IAB donor (donor) CU-UP, and a peer-to peer protocol layer includes a general packet radio service (general packet radio service, GPRS) tunnelling protocol for the user plane (GPRS tunnelling protocol for the user plane, GTP-U) layer and a user datagram protocol (user datagram protocol, UDP) layer. An IAB donor DU 1 and an IAB donor CU 1 are connected in a wired manner, and a peer-to peer protocol layer includes an internet protocol (internet protocol, IP) layer, an L2, and an L1. A BL is each established between an IAB node 1 and an IAB node 2, and between the IAB node 1 and an IAB donor DU, and a peer-to peer protocol layer includes a BAP layer, an RLC layer, a MAC layer, and a PHY layer. In addition, a peer-to peer stream control transmission protocol (stream control transmission protocol, SCTP) layer and a peer-to peer packet data convergence protocol (packet data convergence protocol, PDCP) layer are established between the terminal and the IAB donor CU-UP. A peer-to peer IP layer is established between the IAB node 2-DU and the IAB donor DU-UP.

It may be learned that, compared with a user plane protocol stack of a single air interface, in a user plane protocol stack in the IAB network, a DU of an access IAB node implements some functions of a gNB-DU of the single air interface (that is, functions of establishing a peer-to-peer RLC layer, a peer-to-peer MAC layer, and a peer-to-peer PHY layer with the terminal and establishing a peer-to-peer GTP-U layer and a peer-to-peer UDP layer with the IAB donor CU-UP). It may be understood that the DU of the IAB access node (IAB node 2) implements the functions of the gNB-DU of the single air interface, and the IAB donor C-UP implements the functions of the gNB-CU of the single air interface.

On the user plane, a PDCP data packet is encapsulated in a GTP-U tunnel between the access IAB node (IAB node 2) and the IAB donor CU-UP for transmission. The GTP-U tunnel is set up on the F1-U interface.

For the control plane, as shown in FIG. 2B, a Uu interface is established between a terminal and an IAB node 2-DU, and a peer-to-peer protocol layer includes an RLC layer, a MAC layer, and a PHY layer. An F1-C interface is established between the IAB node 2-DU and an IAB donor CU 1, and a peer-to-peer protocol layer includes an F1 application protocol (F1 application protocol, F1AP) and an SCTP layer. An IAB donor DU and an IAB donor CU-UP are connected in a wired manner, and a peer-to-peer protocol layer includes an IP layer, an L2, and an L1. A BL is each established between an IAB node 1 and an IAB node 2, and between the IAB node 1 and an IAB donor DU, and a peer-to peer protocol layer includes a backhaul adaptation protocol (Backhaul Adaptation Protocol, BAP) layer, an RLC layer, a MAC layer, and a physical (physical, PHY) layer. In addition, a peer-to-peer RRC layer and a peer-to-peer PDCP layer are established between the terminal and the IAB donor CU-UP, and a peer-to-peer IP layer is established between the IAB node 1-DU and the IAB donor DU. The BAP layer has at least one of the following capabilities: adding routing information (Routing info) that can be identified by the IAB node to the data packet, performing route selection based on the routing information that can be identified by the IAB node, and performing quality of service (quality of service, QoS) mapping on a plurality of links including the IAB node for the data packet. The bearer mapping on the plurality of links may be mapping performed, based on an identifier of a radio bearer (radio bearer, RB) of the terminal carried by the data packet on the backhaul link, from the RB of the terminal to an RLC bearer, an RLC channel, or a logical channel on the backhaul link. For example, the BAP layer performs a data radio bearer (data radio bearer, DRB) or a signaling radio bearer (signaling radio bearer, SRB) of the terminal to the RLC bearer on the backhaul link. The mapping from an RB, RLC bearer, RLC channel, or logical channel of an ingress link to an RB, an RLC bearer, an RLC channel, or a logical channel of an egress link is performed based on a correspondence between any two or more of the RLC bearers, RLC channels, and logical channels of the ingress link (that is, a link for receiving the data packet) and the egress link (that is, a link for sending the data packet). The RLC is carried in FIG. 2A or FIG. 2B over a channel, for example, a backhaul (backhaul, BH) RLC channel (channel, CH), as an example.

It may be learned that, compared with a control plane protocol stack of a single air interface, in a control plane protocol stack in the IAB network, a DU of an access IAB node (IAB node 2) implements functions of a gNB-DU of the single air interface (that is, functions of establishing a peer-to-peer RLC layer, a peer-to-peer MAC layer, and a peer-to-peer PHY layer with the terminal and establishing a peer-to-peer F1AP layer and a peer-to-peer SCTP layer with a CU). It may be understood that the DU of the access IAB node in the IAB network implements the functions of the gNB-DU of the single air interface, and the IAB donor C-UP implements the functions of the gNB-CU of the single air interface.

On the control plane, an RRC message is encapsulated in an F1AP message between the access IAB node and the IAB donor CU-UP for transmission. Specifically, in an uplink direction, the terminal encapsulates the RRC message in a PDCP protocol data unit (protocol data unit, PDU), and sends a processed PDCP protocol data unit sequentially processed through the RLC layer, the MAC layer, and the PHY layer to the IAB node 2-DU. The IAB node 2-DU obtains a processed PDCP PDU sequentially processed through the PHY layer, the MAC layer, and the RLC layer, encapsulates the processed PDCP PDU in an F1AP message, and sequentially processes the F1AP message through the SCTP layer and the IP layer to obtain an IP packet. The IAB node 2-MT processes the IP packet separately through the BAP layer, the RLC layer, the MAC layer, and the PHY layer, and sends a processed IP packet to the IAB node 1-DU. Similarly, the IAB node 1-MT sends the IP packet to the IAB donor DU. After obtaining an IP packet through parsing, the IAB donor DU sends the IP packet to the IAB donor CU-UP. The IAB donor CU-UP processes the IP packet through an SCTP layer, an F1AP layer, and a PDCP layer to obtain an RRC message. Operations in a downlink direction are similar. Details are not described herein again.

It should be noted that one IAB node may play one or more roles. The IAB node may have a protocol stack of the one or more roles. Alternatively, the IAB node may have a set of protocol stacks, and for different roles of the IAB node, protocol layers corresponding to different roles in the protocol stacks may be used to perform processing. The following provides descriptions by using an example in which the IAB node has the protocol stacks of the one or more roles.

(1) Protocol stack of a common terminal

When accessing the IAB network, the IAB node can function as a common terminal. In this case, an MT of the IAB node has a protocol stack of the common terminal, for example, the protocol stack of the terminal in FIG. 2A and FIG. 2B: the RRC layer, the PDCP layer, the RLC layer, the MAC layer, and the PHY layer. On a control plane, an RRC message of the IAB node is encapsulated in an F1AP message between a parent node of the IAB node and an IAB donor CU for transmission. On a user plane, a PDCP data packet of the IAB node is encapsulated in a GTP-U tunnel between a parent node of the IAB node and an IAB donor CU for transmission.

In addition, after the IAB node accesses the IAB network, the IAB node may still play a role of the common terminal. For example, the IAB node transmits an uplink data packet and/or a downlink data packet of the IAB node with an IAB donor, and performs measurement through the RRC layer.

(2) Protocol stack of an access IAB node

After the IAB node accesses the IAB network, the IAB node may provide an access service for a terminal, to play a role of an access IAB node. In this case, the IAB node has a protocol stack of the access IAB node, for example, the protocol stack of the IAB node 2 in FIG. 2A and FIG. 2B.

In this case, there may be two sets of protocol stacks on an interface that is of the IAB node and that faces a parent node of the IAB node. One is a protocol stack of a common terminal, and the other is a protocol stack (that is, a protocol stack of the access IAB node) that provides a backhaul service for the terminal. Optionally, same protocol layers of the two sets of protocol stacks may be shared. For example, the two sets of protocol stacks correspond to a same RLC layer, a same MAC layer, a same PHY layer, or a same BAP layer.

(3) Protocol stack of an intermediate IAB node

After accessing the IAB network, the IAB node may play a role of an intermediate IAB node. In this case, the IAB node has a protocol stack of the intermediate IAB node, for example, the protocol stack of the IAB node 1 in FIG. 2A and FIG. 2B.

In this case, there may be two sets of protocol stacks on an interface that is of the IAB node and that faces a parent node of the IAB node. One is a protocol stack of a common terminal, and the other is a protocol stack (that is, a protocol stack of the intermediate IAB node) that provides a backhaul service for an IAB child node. Optionally, same protocol layers of the two sets of protocol stacks may be shared. For example, the two sets of protocol stacks correspond to a same RLC layer, a same MAC layer, a same PHY layer, or a same BAP layer.

In addition, the IAB node may function as an access IAB node and an intermediate IAB node at the same time. For example, the IAB node may be an access IAB node for some terminals and an intermediate IAB node for other terminals. In this case, the IAB node may have three sets of protocol stacks: One is the protocol stack of the common terminal, one is the protocol stack of the access IAB node, and one is the protocol stack of the intermediate IAB node. Optionally, same protocol layers of the three sets of protocol stacks may be shared. For example, the three sets of protocol stacks correspond to a same RLC layer, a same MAC layer, a same PHY layer, or a same BAP layer.

It should be noted that FIG. 2A and FIG. 2B are described by using the IAB network as an example. Content in FIG. 2A and FIG. 2B is also applicable to another type of relay network other than the IAB network. For a control plane protocol stack architecture of the relay network, refer to FIG. 2B. For a user plane protocol stack architecture of the relay network, refer to FIG. 2A. The IAB nodes in FIG. 2A and FIG. 2B may be replaced with relay (relay) nodes. For example, the IAB node 2 may be replaced with a relay node 2, the IAB node 1 may be replaced with a relay node 1, and the IAB donor may be replaced with a donor node. The donor node has a CU protocol stack and a DU protocol stack. Other content is the same as the content described in FIG. 2A and FIG. 2B. For details, refer to descriptions in FIG. 2A and FIG. 2B. Details are not described herein again.

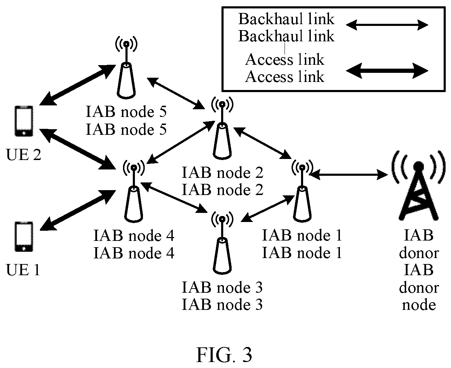

FIG. 3 is a diagram of an IAB networking scenario. A parent node of an IAB node 1 is a DgNB, the IAB node 1 is a parent node of an IAB node 2 and an IAB node 3, both the IAB node 2 and the IAB node 3 are parent nodes of an IAB node 4, and a parent node of an IAB node 5 is the IAB node 3. An uplink data packet sent by UE 1 may be transmitted to the DgNB via one or more IAB nodes, and then the DgNB sends the uplink data packet to a mobile gateway device (for example, a user plane function unit in a 5G core network). After receiving a downlink data packet from the mobile gateway device, the DgNB sends the downlink data packet to the UE 1 via the one or more IAB nodes. The same applies to UE 2.

There are two available paths for data packet transmission between the UE 1 and the DgNB. Path 1: UE 1→IAB node 4→IAB node 3→IAB node 1→DgNB. Path 2: UE 1→IAB node 4→IAB node 2→IAB node 1→DgNB.

The IAB node 4 is an access IAB node of the UE 1. In the path 1, the IAB node 3 and the IAB node 1 are intermediate IAB nodes. In the path 2, the IAB node 2 and the IAB node 1 are intermediate IAB nodes. The DgNB is a target node.

There are three available paths for data transmission between the UE 2 and the DgNB. Path 3: UE 2→IAB node 4→IAB node 3→IAB node 1→DgNB. Path 4: UE 2→IAB node 4→IAB node 2→IAB node 1→DgNB. Path 5: UE 2→IAB node 5→IAB node 2→IAB node 1→DgNB.

In the path 3, the IAB node 4 is an access IAB node of the UE 1, and the IAB node 3 and the IAB node 1 are intermediate IAB nodes. In the path 4, the IAB node 4 is an access IAB node of the UE 1, and the IAB node 2 and the IAB node 1 are intermediate IAB nodes. In the path 5, the IAB node 5 is an access IAB node of the UE 1, and the IAB node 2 and the IAB node 1 are intermediate IAB nodes. The DgNB is a target node.

It should be understood that the IAB networking scenario shown in FIG. 3 is merely an example, and there are more other possibilities in the IAB network that supports multi-hop and multi-connection networking. This is not listed one by one herein.

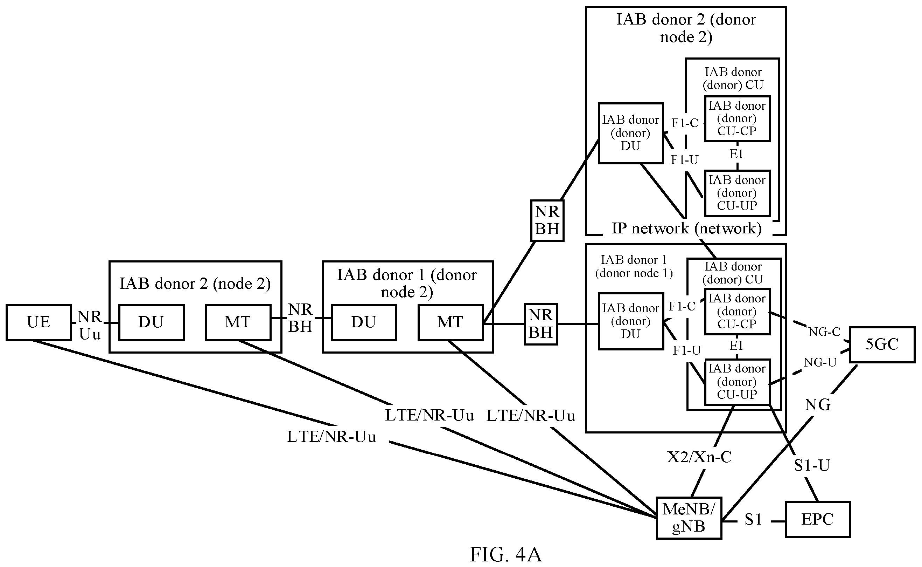

FIG. 4A is a diagram of an IAB network architecture, including a standalone (SA) IAB network and a non-standalone (NSA) IAB network. An IAB node includes an MT part and a DU part. In FIG. 4A, an IAB node 1 and an IAB node 2 are used as an example for description. An IAB donor may be further divided into a DU part and a CU part, and the CU may be further divided into a CU-CP part and a CU-UP part. In FIG. 4A, an IAB donor 1 and an IAB donor 2 are used as an example for description.

There is an F1 interface between a DU part of each IAB node and an IAB donor CU. The F1 interface includes two parts: a control plane part and a user plane part. The user plane part is maintained between an IAB-DU and an IAB donor CU-UP, and the control plane part is maintained between the IAB-DU and an IAB donor CU-CP. The F1 interface between the IAB-DU and the IAB donor CU is not shown in FIG. 4A. UE is connected to a DU of an IAB node through an NR Uu interface, and an MT and a DU in each IAB node are connected through an NR BH interface. The IAB donor CU-CP is connected to the IAB donor CU-UP through an E1 interface.

When the IAB node works in an SA mode, the IAB node may be connected to one parent node or dually connected to two parent nodes. The two parent nodes may be controlled by a same IAB donor or respectively controlled by different IAB donors. An F1 interface is established between the DU part of the IAB node and an IAB donor, and the IAB donor may be connected to a 5G core network (5G core, 5GC), that is, a dashed line part in the figure. The IAB donor CU-CP is connected to a control plane network element (for example, an access and mobility management function AMF) in the 5GC through an NG control plane interface (NG-C), and the IAB donor CU-UP is connected to a user plane network element (for example, a user plane function UPF) in the 5GC through an NG user plane interface (NG-U).

When the IAB node works in an NSA mode (or an EN-DC mode), the IAB donor CU-UP may be connected to an EPC (for example, connected to a serving gateway (serving gateway, SGW)) through an S1 user plane interface, and a MeNB is connected to an MT of the IAB node through an LTE Uu air interface, the MeNB is connected to the IAB donor CU-CP through an X2/Xn-C interface, and the MeNB is connected to the EPC through an S1 interface (including an S1 interface user plane and an S1 interface control plane). For example, the IAB donor CU-UP is connected to the EPC through the S1 interface user plane (S1-U).

In another possible case, the MeNB in FIG. 4A may alternatively be replaced with a 5G base station gNB, and the LTE-Uu interface with a dashed line is correspondingly replaced with an NR-Uu interface in FIG. 4A. The gNB may set up a user plane interface and/or a control plane interface with the 5GC. The gNB and the IAB donor provide a dual connectivity service for the IAB node. The gNB may be used as a role of a primary base station of the IAB node or a role of a secondary base station of the IAB node.

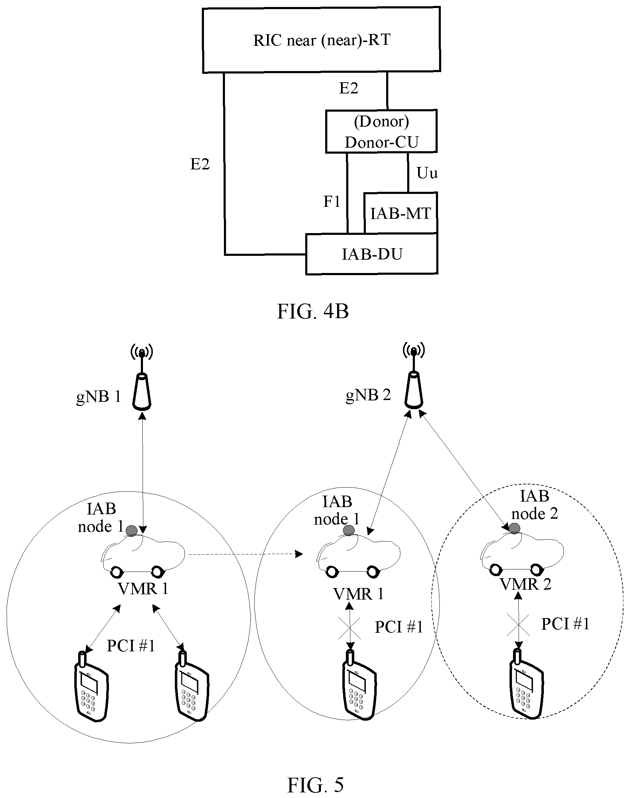

FIG. 4B is a diagram of another IAB network architecture. The network structure is an open RAN (Open RAN, O-RAN)-based IAB network architecture. An RIC is an O-RAN intelligent controller, and is configured to collect network information and execute a necessary optimization task. The RIC communicates with a donor-CU and an IAB-DU through an E2 interface. In other words, the RIC may directly control the IAB-DU, or control the IAB-DU via the donor-CU.

(2) Cell identity: The cell identity may be indicated by a PCI or a CGI, and is an important parameter of a cell. Each cell corresponds to a cell identity, and the cell identity is used for distinguishing different cells. Downlink signal synchronization, signal demodulation, and signal switching may be performed based on the cell identity. An example in which the cell identity is a PCI is used for a detailed description herein. There are 1008 PCIs in 5G. The 10008 PCIs are divided into 336 groups, and each group includes three PCIs, as shown in the following:

$$N_{ID}^{cell} = 3N_{ID}^{(1)} + N_{ID}^{(2)}, \text{where } N_{ID}^{(1)} = \{0{\sim}335\} \ N_{ID}^{(2)} = \{0,1,2\}.$$

Refer to Table 1. Main differences between a 5G PCI and an LTE PCI are as follows:

Table 1

| Sequence | LTE | 5G NR | Difference and impact |
|---|---|---|---|
| Synchronization signal | A primary synchronization signal is related to a PCI mod 3 and is designed and constructed based on a ZC sequence, where a sequence length is 62 | A primary synchronization signal is related to a PCI mod 3 and is designed and constructed based on an m sequence, where a sequence length is 127 | The LTE requires that PCIs of neighboring cells mod 3 are different to avoid access failures; and 5G requires that PCIs of neighboring cells mod 3 are different or the same, which has little impact on synchronization delay and does not affect user experience |
| Uplink reference signal | A DMRS for a PUCCH/PUSCH and an SRS are based on a ZC sequence, where the ZC sequence has 30 groups of roots, and the roots are associated with PCIs | A DMRS for a PUSCH/PUCCH and an SRS are based on a ZC sequence, where the ZC sequence has 30 groups of roots, and the roots are associated with PCIs | Same as that in LTE, PCIs of neighboring cells mod 30 need to be different in 5G |
| Downlink reference signal | A CRS resource location is determined by a PCI mod 3 | A resource location of a DMRS for an SS BLOCK is determined by a PCI mod 4 | There is no CRS in 5G; and the DMRS for the SS BLOCK is added in 5G, where DMRS frequency domain positions may be staggered when PCIs mod 4 are different, a pilot is interfered by the SSB but performance is not affected, and neighboring cells do not need the PCIs mod 4 to be different |

PCI planning complies with the following principles:

(a). A same PCI cannot be allocated to neighboring cells. If the same PCI is allocated to the neighboring cells, UE cannot detect the neighboring cells in an overlapping coverage area, affecting handover and camping.

(b). If serving cells have a same frequency, the same PCI cannot be allocated to the neighboring cells. If the same PCI is allocated to the neighboring cells, a source base station cannot determine a target cell for handover based on the PCI when UE reports the PCI of the neighboring cell to a base station of a source cell.

A ZC sequence number based on 3GPP PUSCH DMRS is related to the PCI mod 30. For a PUCCH DMRS and an SRS, an algorithm uses the PCI mod 30 as an upper-layer configuration ID and selects a sequence group. Therefore, the PCIs of the neighboring cells mod 30 should be different to ensure correct demodulation of an uplink signal.

In an IAB network, a cell identity may be configured by using OAM, or after an F1 interface is established between an IAB node and a CU, the IAB node reports a configured cell identity to the CU, or the CU reconfigures a cell identity based on the cell identity reported by the IAB node and other information. Details are not described herein. In conclusion, the cell identity is preconfigured.

In R16/17, an IAB node is fixedly disposed, in other words, is statically deployed. In R18, an IAB node may be installed on a vehicle and move with the vehicle, as shown in FIG. 5. For example, a vehicle VMR 1 receives a service from a gNB 1, an IAB node 1 is carried on the vehicle VMR 1, and a cell identity configured by the IAB node 1 is a PCI #1. During movement, the VMR 1 moves to a gNB 2 to receive a service, and the gNB 2 further provides a service for a vehicle VMR 2. If a cell identity PCI #1 is also configured under an IAB node 2 carried on the VMR 2, the two cell identities are the same. As a result, cell collision occurs, affecting communication quality. It can be learned that an existing static PCI configuration method is no longer applicable. For a mobile IAB scenario in R18, if a static PCI is used, a conflict with a PCI of a neighboring cell may occur during movement of an IAB cell. Therefore, a new cell identity configuration method is urgently required to avoid signal collision.

The following describes cell identity configuration solutions in different scenarios.

Scenario 1: During movement of an IAB node, an F1 connection relationship between an IAB-DU and a donor-CU remains unchanged.

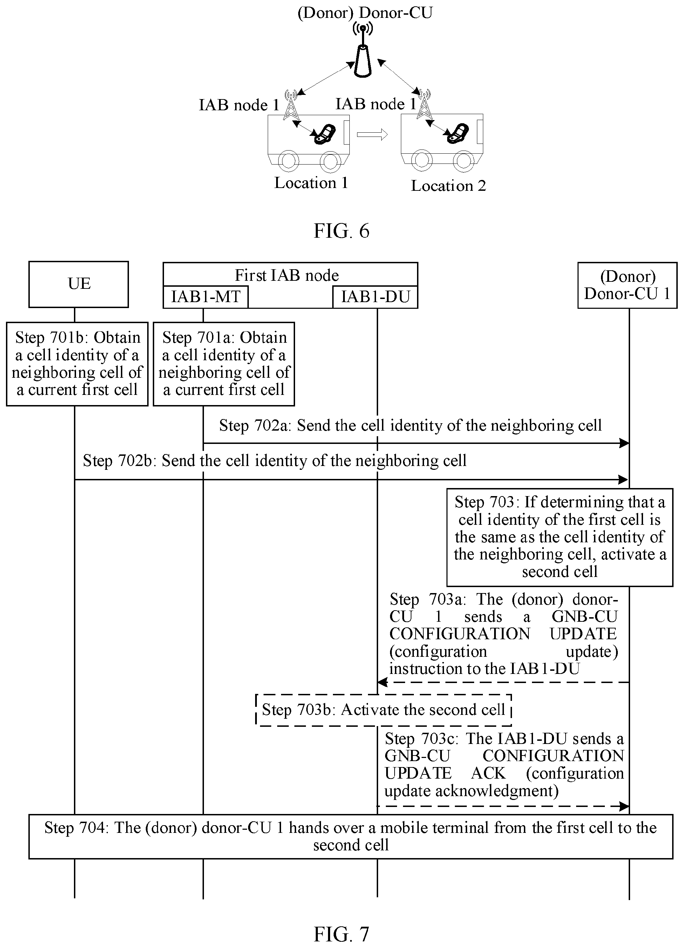

As shown in FIG. 6, when a vehicle is at a location 1, an IAB-DU of an IAB node 1 performs data transmission under management of a donor-CU. When the vehicle is at a location 2, the IAB-DU of the IAB node 1 still performs data transmission under the management of the donor-CU. It may be understood that the IAB node 1 does not migrate from the serving donor-CU when moving from the location 1 to the location 2.

Refer to FIG. 7. This application provides a cell identity configuration method. The method may be performed through interaction between UE, an IAB node, and a donor node (Donor-CU). The IAB node includes an IAB-DU and an IAB-MT. In actual application, the donor node may establish F1 connections to a plurality of IAB nodes to exchange data. Only one IAB node is used as an example for description herein. However, in actual application, a quantity of IAB nodes is not limited during cell identity configuration. In FIG. 7, an example in which the IAB node is a first IAB node, the first IAB node includes an IAB1-MT and an IAB1-DU, and the donor node is a donor-CU 1 is used for description. The method is performed as follows.

Step 701a: The IAB1-MT obtains a cell identity of a neighboring cell of a current first cell, where the first cell is a serving cell of the first IAB node.

Step 701b: UE obtains a cell identity of a neighboring cell of a current first cell.

It should be noted that, in actual application, step 701a and step 701b may be optionally performed, or may be both performed. This is not specifically limited in this application. However, the neighboring cell of the first cell obtained by the IAB-MT may be the same as or different from the neighboring cell of the first cell obtained by the UE. The cell identity of the neighboring cell obtained by the IAB-MT and the cell identity of the neighboring cell obtained by the UE may be partially or completely the same. This is not specifically limited in this application.

In a scenario in which the IAB node moves, the neighboring cell of the first cell may be a cell of another IAB node (the IAB node may be mobile or may be at a fixed location), or may be a cell of a non-IAB node, that is, a cell in a conventional configuration. This is not specifically limited in this application. For example, the IAB1-MT is currently located at a location A, a cell 1 of the IAB 1 is currently a serving cell (that is, a cell that provides a communication service for a mobile terminal served by the first IAB node), and a neighboring cell of the cell 1 includes a cell X under an IAB node, that is, an IAB 2, and a cell A under a non-IAB node. In this case, the IAB1-MT may obtain cell identities of the cell X and the cell A. The IAB1-MT is currently located at a location B, the cell 1 of the IAB 1 is currently a serving cell, and a neighboring cell of the cell 1 includes a cell Y under an IAB node, that is, an IAB 3. In this case, the IAB1-MT may obtain a cell identity of the cell Y.

The cell identity may be a PCI or a CGI. This is not specifically limited in this application.

Step 702a: The IAB1-MT sends the cell identity of the neighboring cell to the donor-CU 1.

Step 702b: The UE sends the cell identity of the neighboring cell to the donor-CU 1.

It should be noted that, in actual application, step 701a and step 701b may be optionally performed, or may be both performed. This is not specifically limited in this application. However, when step 701a exists, step 702a definitely exists, and when step 701b exists, step 702b definitely exists.

Correspondingly, the donor-CU 1 obtains the cell identity of the neighboring cell.

Step 703: If determining that a cell identity of the first cell is the same as the cell identity of the neighboring cell, the donor-CU 1 activates a second cell, where a cell identity of the second cell is different from the cell identity of the neighboring cell, and the second cell is a cell other than the first cell of the first IAB node.

Optionally, that the cell identity of the first cell is the same as the cell identity of the neighboring cell may include the following cases:

Case 1: The first cell and the neighboring cell use a same cell identity. Using a same cell identity may be understood as using a partially same or completely same cell identity. For example, cell identities of first cells include a PCI 1, a PCI 2, and a PCI 3. Cell identities of neighboring cells of the first cells include a PCI 1, a PCI 3, and a PCI 5. The cell identities PCI 1 and PCI 3 of the first cells are the same as the cell identities PCI 1 and PCI 3 of the neighboring cells, and it may be understood that same cell identities are used. Cell identities of first cells include a PCI 1 and a PCI 2. Cell identities of neighboring cells of the first cells include a PCI 1 and a PCI 2. The cell identities PCI 1 and PCI 2 of the first cells are the same as the cell identities PCI 1 and PCI 2 of the neighboring cells, and it may be understood that same cell identities are used.

Case 2: A remainder obtained by the cell identity of the first cell modulo N is the same as a remainder obtained by the cell identity of the neighboring cell modulo N, where N may be 3 or 30. When a synchronization signal is processed, N is 3. When an uplink reference signal is processed, N is 30. For understanding, refer to Table 1. Details are not described herein again. It is assumed that cell identities of the first cells include a PCI 1 and a PCI 3. Cell identities of neighboring cells of the first cells include a PCI A and a PCI B. If remainders obtained by the cell identities PCI 1 and PCI 3 of the first cell modulo 3 are the same as remainders obtained by the cell identities PCI A and PCI B of the neighboring cell modulo 3, it may be understood that same cell identities are used.

According to the foregoing cases, it is determined that the cell identity of the first cell is the same as the cell identity of the neighboring cell. Therefore, it can be learned that a cell identity conflict exists between the first cell and the neighboring cell, so that continuing to use the current cell identity that affects quality of service of the terminal should be avoided.

Specifically, when step 703 is performed, the donor-CU 1 has established an F1 connection to the IAB 1-DU, and both the donor-CU 1 and the IAB1-DU know an active cell and an inactive cell of the first IAB node. The second cell may be activated with reference to the following steps.

Step 703a: The donor-CU 1 sends a GNB-CU CONFIGURATION UPDATE (configuration update) instruction to the IAB 1-DU, where the instruction is used for determining to activate the second cell.

Step 703b: The IAB1-DU activates the second cell.

Step 703c: The IAB1-DU sends a GNB-CU CONFIGURATION UPDATE ACK (configuration update acknowledgment) to the donor-CU 1.

Step 704: The donor-CU 1 hands over a mobile terminal (that is, the UE) from the first cell to the second cell.

In addition, after step 704 is performed, the first cell may be deactivated, and then activated in another case in which there is a communication requirement.

Through cell identity configuration in this manner, a cell identity conflict between an IAB cell and a neighboring cell present when the IAB cell moves can be avoided, and service stability of the IAB node and the mobile terminal can be ensured, ensuring service experience of the mobile terminal. In addition, in this manner, a cell identity of a current serving cell does not need to be reconfigured, avoiding an interrupted connection when the mobile terminal re-accesses a network.

Optionally, when the cell identity configuration solution in FIG. 7 is not used, the donor-CU may configure a globally unique cell identity for a cell of the IAB node to distinguish from an existing cell identity, to ensure that the IAB node does not conflict with a cell identity of another cell during movement. For example, a cell identity IAB1-PCI 1 is configured for the cell 1 by the IAB node 1. This is not specifically limited herein, and only needs to ensure that the cell identity of the cell of the IAB node is globally unique.

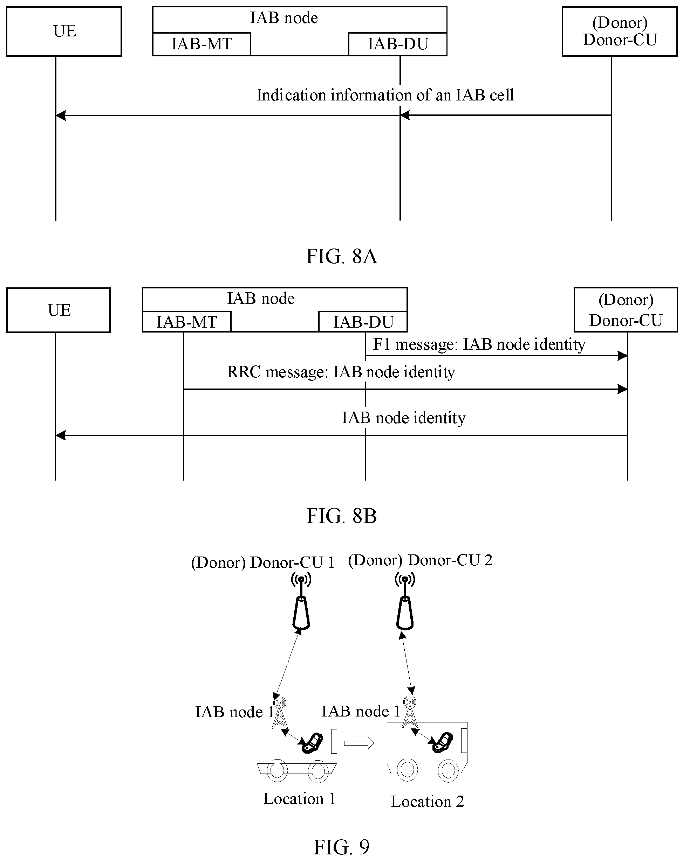

Optionally, an existing configuration method is still used for the cell identity of the cell of the IAB node, but the donor-CU may additionally broadcast indication information of the IAB cell. As shown in FIG. 8A, the donor-CU sends the indication information of the IAB cell to the IAB-DU, and the IAB-DU internally transmits the indication information to the UE, so that the UE accessing the IAB node can distinguish the cell identity to avoid occurrence of a conflict. For example, the indication information sent by the donor-CU includes information such as the cell 1 of the cell identity belonging to the IAB node 1.

Optionally, the IAB node may report an IAB node identity to the donor-CU via the IAB-MT or the IAB-DU, or report indication information indicating that the cell identity of the cell of the IAB node does not need to be changed. In this case, the donor-CU directly broadcasts identity information of the IAB node, so that the mobile terminal served by the IAB node performs differentiation when finding that identities of neighboring cells are the same, avoiding occurrence of a conflict. As shown in FIG. 8B, the IAB-DU may send an IAB node identity via an F1 message, the IAB-MT may send the IAB node identity to the donor-CU via an RRC message, and the donor-CU may additionally broadcast the IAB node identity, so that the UE may further distinguish between cells when finding that an identity of an IAB cell is the same as an identity of a neighboring cell. Optionally, the IAB-DU may further send indication information indicating that a cell identity of the cell of the IAB node does not need to be changed, to avoid reconfiguration of the cell identity of the cell of the IAB node by the donor-CU. For example, after sending an identity 1 of an IAB node 1 to the donor-CU, the IAB node 1 sends indication information indicating that a cell identity of the IAB node 1 does not need to be changed to the donor-CU, and the donor-CU does not reconfigure the cell identity of the cell of the IAB node 1.

Scenario 2: During movement of an IAB node, an IAB-DU migrates from a donor-CU 1 to a donor-CU 2.

As shown in FIG. 9, when a vehicle is at a location 1, an IAB-DU of an IAB node 1 performs data transmission under management of a donor-CU 1. When the vehicle is at a location 2, the IAB-DU of the IAB node 1 performs data transmission under management of a donor-CU 2. It may be understood that the IAB node 1 migrates between serving donor-CUs when moving from the location 1 to the location 2.

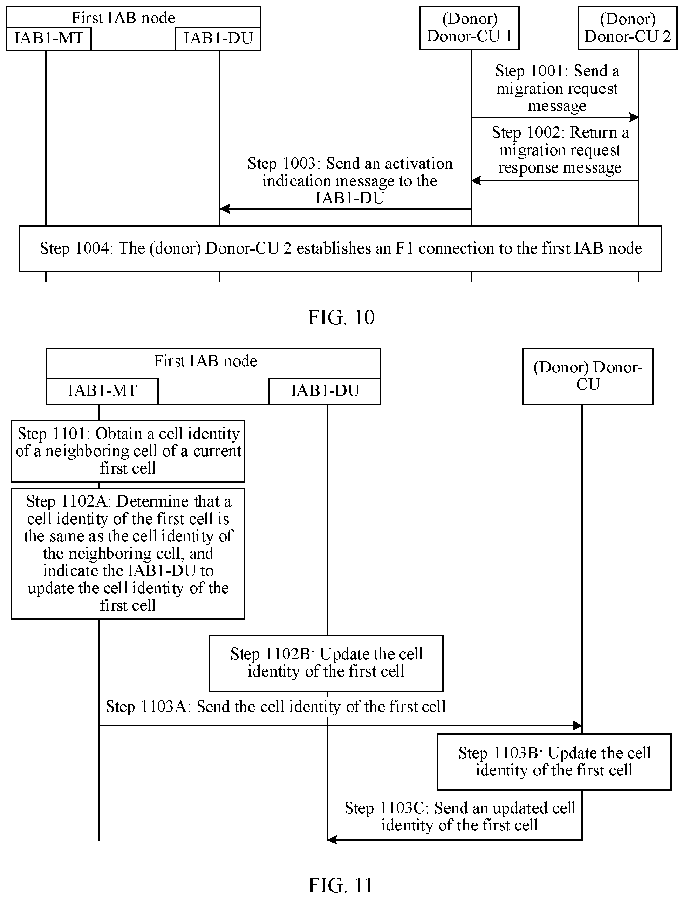

Refer to FIG. 10. This application provides a cell identity configuration method. The method may be performed through interaction of an IAB node with a first donor node (Donor-CU 1) and a second donor node (Donor-CU 2). The IAB node includes an IAB1-DU and an IAB1-MT. The method is performed as follows.

Step 1001: The donor-CU 1 sends a migration request message to the donor-CU 2, where the migration request message includes cell configuration information of a first IAB node.

The cell configuration information of the first IAB node includes a cell identity of an active cell and a cell identity of an inactive cell. For example, the donor-CU 1 configures a cell identity PCI 1 of a cell 1 and a cell identity PCI 2 of a cell 2, where the cell 1 and the cell 2 are active cells; and a cell identity PCI 3 of a cell 3 and a cell identity PCI 4 of a cell 4, where the cell 3 and the cell 4 are inactive cells.

Step 1002: The donor-CU 2 returns a migration request response message, where the migration request response message includes reconfigured cell configuration information of the first IAB node, and a reconfigured cell identity of the first IAB node is different from a cell identity of a neighboring cell.

For example, after receiving the migration request message, the donor-CU 2 finds, after F1 interface switching, that a cell identity of a to-be-activated new cell of the first IAB node conflicts with the cell identity of the neighboring cell, and may reconfigure the cell identity of the to-be-activated new cell.

Step 1003: The donor-CU 1 sends an activation indication message to an IAB1-DU, where the activation indication message includes the reconfigured cell configuration information of the first IAB node.

Step 1004: The donor-CU 2 establishes an F1 connection to the first IAB node.

In cell identity configuration in this manner, a conflict with the cell identity of the neighboring cell can be avoided, and service stability of the IAB node and the mobile terminal can be ensured during movement of an IAB cell and upon migration between donor nodes, ensuring service experience of the mobile terminal.

In addition, it should be further noted that, regardless of whether the IAB node migrates between donor-CUs, refer to FIG. 11, and cell identity configuration is performed as follows.

Step 1101: An IAB1-MT obtains a cell identity of a neighboring cell of a current first cell, where the first cell is a serving cell of a first IAB node.

Step 1102A: The IAB1-MT determines that a cell identity of the first cell is the same as the cell identity of the neighboring cell, and indicates an IAB1-DU to update the cell identity of the first cell.

It may be understood with reference to step 703 that the cell identity of the first cell is the same as the cell identity of the neighboring cell, and details are not described herein again.

Step 1102B: The IAB1-DU updates the cell identity of the first cell, where an updated cell identity of the first cell is different from the cell identity of the neighboring cell.

Step 1103A: The IAB1-MT sends the cell identity of the first cell to the donor-CU.

Step 1103B: The donor-CU updates the cell identity of the first cell.

Step 1103C: The donor-CU sends an updated cell identity of the first cell to the first IAB node.

It should be noted that step 1102A and step 1102B as well as step 1103A and step 1103B may be optionally performed. This is not specifically limited in this application. In addition, in a scenario in which the IAB node migrates between donor-CUs, in step 1103A, the IAB1-MT sends the cell identity of the first cell to the donor-CU 1, and updates the cell identity of the first cell based on the procedure of migrating between donor-CUs in FIG. 10.

Through cell identity configuration in this manner, a cell identity conflict between an IAB cell and a neighboring cell present when the IAB cell moves can be avoided, and service stability of the IAB node and the mobile terminal can be ensured, ensuring service experience of the mobile terminal.

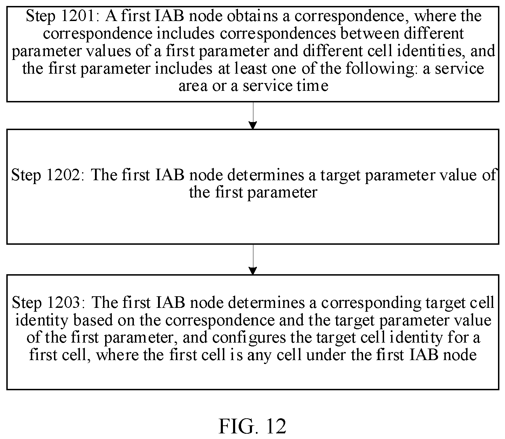

In addition, it should be further noted that, regardless of whether the IAB node migrates between donor-CUs, refer to FIG. 12, and cell identity configuration is performed as follows.

Step 1201: A first IAB node obtains a correspondence, where the correspondence includes correspondences between different parameter values of a first parameter and different cell identities, and the first parameter includes at least one of the following: a service area or a service time.

It should be noted that the correspondence may be delivered by a donor-CU that has a connection relationship with the first IAB node, or may be configured by a network, for example, OAM. This is not specifically limited in this application. The correspondence may be configured with reference to the following Table 2. In actual application, only a first column and a second column in Table 2 may exist, only a first column and a third column may exist, or all three columns may exist. This is not specifically limited in this application. For example, when the table includes three columns, an IAB node is located in an area 1, and a current time is Friday, a cell identity of a PCI A may be configured for a cell of the IAB node.

Table 2

| Cell identity | Service area | Service time |
|---|---|---|
| PCI A | Area 1 (longitude X1 to X2 and latitude Y1 to Y2) | Friday |
| PCI 1 | Area 2 (longitude X4 to X5 and latitude Y1 to Y2) | Monday to Wednesday |
| ... | ... | ... |

Step 1202: The first IAB node determines a target parameter value of the first parameter.

In a manner, the first IAB node may determine a first service area based on a current location of the first IAB node, and use area information of the first service area as the target parameter value of the first parameter. For example, if the first IAB node is located at a location 1 with a longitude of 30 and a latitude of 120, and the location 1 is exactly located in an area A, the area A may be used as the target parameter value of the first parameter.

In another manner, the first IAB node may determine a first service time based on a current time, and use the first service time as the target parameter value of the first parameter. For example, if the current time is 14:00 and is exactly within a time period 1, the time period 1 may be used as the target parameter value of the first parameter.

In still another manner, the first IAB node may further determine a second service area based on a current location of the first IAB node, and determine a second service time based on a current time. The first IAB node determines area information of the second service area and the second service time together as the target parameter value of the first parameter. For example, if the current time is 14:00 and is exactly within a time period 1, the first IAB node is located at a location 2 with a longitude of 35 and a latitude of 125, and the location 2 is exactly located in an area B, the time period 1 and the area B may be jointly used as the target parameter value of the first parameter.

Step 1203: The first IAB node determines a corresponding target cell identity based on the correspondence and the target parameter value of the first parameter, and configures the target cell identity for a first cell, where the first cell is any cell of the first IAB node.

To avoid a conflict between a cell identity of the cell of the IAB node and a cell identity of a neighboring cell, the IAB node may perform configuration based on the service area, the service time, or the like, to ensure that the cell identity is globally unique. In this manner, quality of service of a mobile terminal can be ensured, so that a cell identity of a serving cell does not conflict with a cell identity of a neighboring cell, and service experience of the mobile terminal can be ensured.

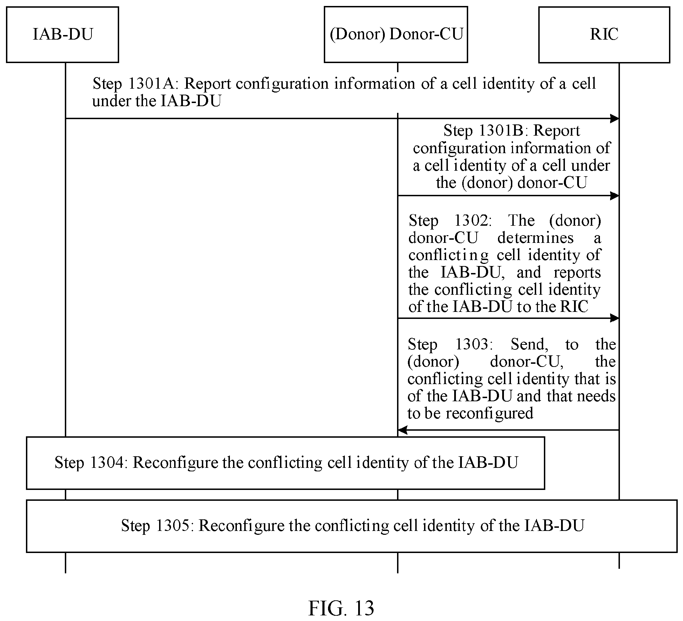

When the IAB network architecture shown in FIG. 4B is used, a cell identity configuration solution may be performed with reference to FIG. 13. Details are as follows.

Step 1301A: An IAB-DU reports configuration information of a cell identity of a cell of the IAB-DU through an E2 interface.

Step 1301B: A donor-CU reports configuration information of a cell identity of a cell of the donor-CU through the E2 interface.

Step 1301A and step 1301B may be optionally performed, or may be both performed. This is not specifically limited in this application. Through step 1301A and/or step 1301B, an RIC may know configuration information of cell identities of a plurality of cells under the RIC.

Step 1302: The donor-CU determines a conflicting cell identity of the IAB-DU, and reports the conflicting cell identity of the IAB-DU to the RIC.

Certainly, in actual application, the RIC may determine, after obtaining the reported configuration information of the cell identity of the cell, whether a conflict exists. This is not specifically limited in this application.

Step 1303: The RIC sends, to the donor-CU, the conflicting cell identity that is of the IAB-DU and that needs to be reconfigured.

Step 1304: The donor-CU reconfigures the conflicting cell identity of the IAB-DU.

Step 1305: The RIC reconfigures the conflicting cell identity of the cell of the IAB-DU.

Step 1303 and step 1304 as well as step 1305 may be optionally performed. This is not specifically limited in this application.

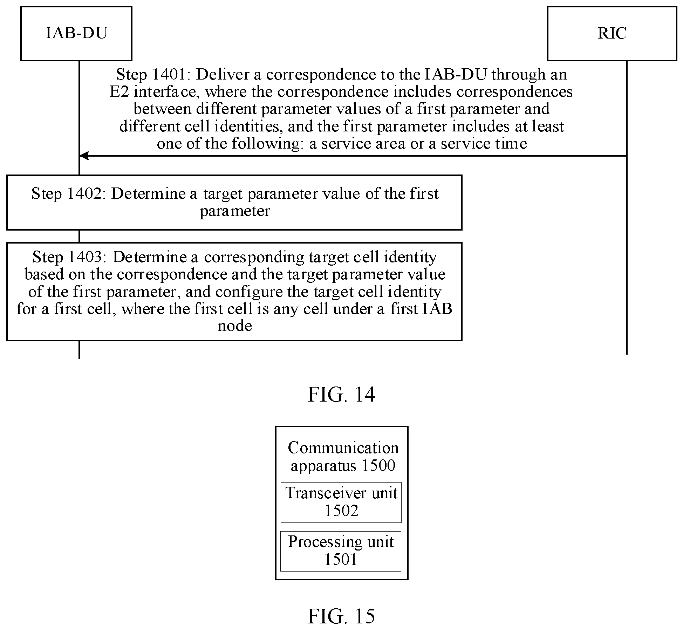

In addition, refer to FIG. 14. Cell identity configuration is performed as follows.

Step 1401: An RIC delivers a correspondence to an IAB-DU through an E2 interface, where the correspondence includes correspondences between different parameter values of a first parameter and different cell identities, and the first parameter includes at least one of the following: a service area or a service time. The process may be understood with reference to step 1201, and details are not described herein again.

Step 1402: The IAB-DU determines a target parameter value of the first parameter. The process may be understood with reference to step 1202, and details are not described herein again.

Step 1403: The IAB-DU determines a corresponding target cell identity based on the correspondence and the target parameter value of the first parameter, and configures the target cell identity for a first cell, where the first cell is any cell of a first IAB node.

Performing cell identity configuration based on the service area and/or the service time avoids a conflict with a cell identity of a neighboring cell during movement of the IAB cell, and may ensure service stability of an IAB node and a mobile terminal, ensuring service experience of the mobile terminal.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 15 is a block diagram of a communication apparatus according to an embodiment of this application. As shown in FIG. 15, a communication apparatus 1500 may include a processing unit 1501 and a transceiver unit 1502. The processing unit 1501 is configured to control and manage an action of the communication apparatus 1500. The transceiver unit 1502 is configured to support communication between the communication apparatus 1500 and another device. Optionally, the transceiver unit 1502 may include a receiving unit and/or a sending unit, configured to perform a receiving operation and a sending operation, respectively. Optionally, the communication apparatus 1500 may further include a storage module, configured to store program code and/or data of the communication apparatus 1500. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing terminal device, IAB-DU, donor CU, or the like.

In an embodiment, the transceiver unit 1502 of the communication apparatus 1500 obtains a cell identity of a neighboring cell of a current first cell. The first cell is a serving cell of a first IAB node. The processing unit 1501 is configured to: if determining that a cell identity of the first cell is the same as the cell identity of the neighboring cell, activate a second cell, and hand over a mobile terminal from the first cell to the second cell. A cell identity of the second cell is different from the cell identity of the neighboring cell, and the second cell is a cell other than the first cell of the first IAB node.

In an optional manner, that the cell identity of the first cell is the same as the cell identity of the neighboring cell includes one or more of the following: the first cell and the neighboring cell use a same cell identity; or a remainder obtained by the cell identity of the first cell modulo N is the same as a remainder obtained by the cell identity of the neighboring cell modulo N, where N is 3 or 30.

In an optional manner, the cell identity includes one of the following: a PCI and a CGI.

In another embodiment, the transceiver unit 1502 of the communication apparatus 1500 obtains a cell identity of a neighboring cell of a current first cell. The first cell is a serving cell of a first IAB node. The processing unit 1501 is configured to determine that a cell identity of the first cell is the same as the cell identity of the neighboring cell, and update the cell identity of the first cell. An updated cell identity of the first cell is different from the cell identity of the neighboring cell.

In an optional manner, when obtaining the cell identity of the neighboring cell of the current first cell, the transceiver unit 1502 may be configured to send the cell identity of the first cell to a donor node, and receive the updated cell identity of the first cell from the donor node.

In an optional manner, that the cell identity of the first cell is the same as the cell identity of the neighboring cell includes one or more of the following: the first cell and the neighboring cell use a same cell identity; or a remainder obtained by N mod the cell identity of the first cell modulo N is the same as a remainder obtained by the cell identity of the neighboring cell modulo N, where N is 3 or 30.

In an optional manner, the cell identity includes one of the following: a PCI and a CGI.

In still another embodiment, the transceiver unit 1502 of the communication apparatus 1500 obtains a correspondence. The correspondence includes correspondences between different parameter values of a first parameter and different cell identities, and the first parameter includes at least one of the following: a service area or a service time. The processing unit 1501 is configured to determine a target parameter value of the first parameter, determine a corresponding target cell identity based on the correspondence and the target parameter value of the first parameter, and configures the target cell identity for a first cell. The first cell is any cell of the first IAB node.

In an optional manner, when determining the target parameter value of the first parameter, the processing unit 1501 may determine a first service area based on a current location of the first IAB node, and use area information of the first service area as the target parameter value of the first parameter; the processing unit 1501 may determine a first service time based on a current time, and use the first service time as the target parameter value of the first parameter, or the processing unit 1501 may determine a second service area based on a current location of the first IAB node, and determines a second service time based on a current time. The first IAB node determines area information of the second service area and the second service time as the target parameter value of the first parameter. The first IAB node may be the communication apparatus 1500 or a communication device in which the communication apparatus 1500 is located.

In an optional manner, the cell identity includes one of the following: a PCI and a CGI.

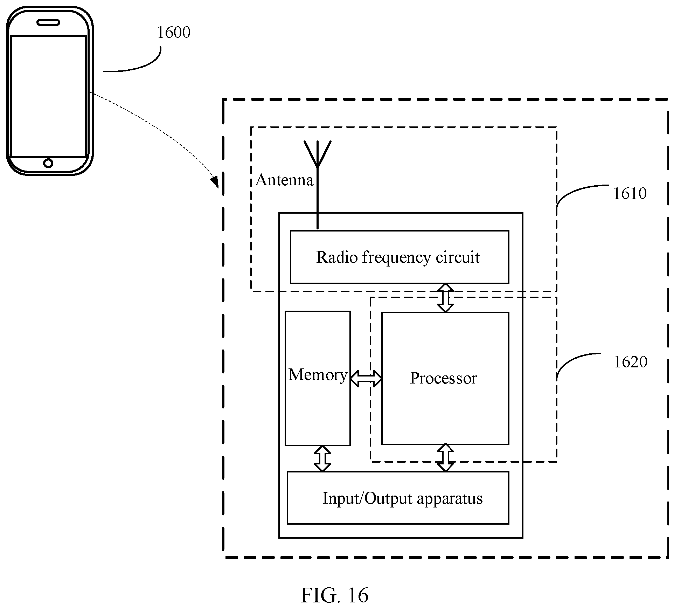

In addition, FIG. 16 is a diagram of a structure of a simplified terminal device according to this application. For ease of understanding and illustration, an example in which the terminal device is a mobile phone is used in FIG. 16. As shown in FIG. 16, the terminal device includes a processor, a memory, a radio frequency circuit, an antenna, and an input/output apparatus.

The processor is mainly configured to process a communication protocol and communication data, control the terminal device, execute a software program, process data of the software program, and the like.

The memory is mainly configured to store the software program and data.

The radio frequency circuit is mainly configured to perform conversion between a baseband signal and a radio frequency signal, and process the radio frequency signal.

The antenna is mainly configured to receive and send a radio frequency signal in the form of an electromagnetic wave.

The input/output apparatus, such as a touchscreen, a display, or a keyboard, is mainly configured to receive data inputted by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 16. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device, and the processor that has a processing function may be considered as a processing unit of the terminal device.

As shown in FIG. 16, a terminal device 1600 includes a transceiver unit 1610 and a processing unit 1620. The transceiver unit 1610 may also be referred to as a transceiver, a transceiver machine, a transceiver apparatus, or the like. The processing unit 1620 may also be referred to as a processor, a processing board, a processing module, a processing apparatus, or the like.

Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1610 is configured to perform a sending operation and a receiving operation of the terminal device in the foregoing method embodiments, and the processing unit 1620 is configured to perform an operation other than the sending and receiving operations of the terminal device in the foregoing method embodiments.

When the terminal device is a chip, the chip includes the transceiver unit 1610 and the processing unit 1620. The transceiver unit 1610 may be an input/output circuit or a communication interface. The processing unit 1620 is a processor, a microprocessor, an integrated circuit, or a logic circuit integrated on the chip.

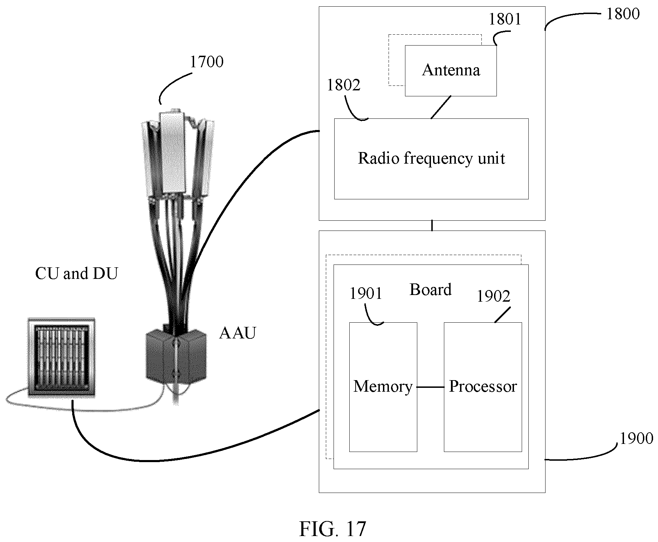

This application further provides a network device. FIG. 17 is a diagram of a structure of a network device 1700 according to an embodiment of this application. The network device 1700 may be applied to the system shown in FIG. 1. For example, the network device 1700 may be an IAB-DU or a donor CU, and is configured to perform a function of the network device in the foregoing method embodiments. It should be understood that the following is merely an example. In a future communication system, the network device may have another form and composition.

For example, in a 5G communication system, the network device 1700 may include a CU, a DU, and an AAU. Compared with a network device in an LTE communication system that includes one or more radio frequency units, for example, a remote radio unit (remote radio unit, RRU) and one or more building baseband units (building baseband unit, BBU),

a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 17, is consistent with that of a conventional 4G network device. The CU and the DU are deployed on same hardware. It should be understood that FIG. 17 is merely an example, and constitutes no limitation on the protection scope of this application. For example, a deployment form may alternatively be that DUs are deployed in a BBU equipment room, CUs or DUs are deployed together, or CUs are centralized at a higher level.

The AAU 1800 may implement a receiving and sending function corresponding to the transceiver unit 1502 in FIG. 15. Optionally, the AAU 1800 may also be referred to as a transceiver machine, a transceiver circuit, a transceiver, or the like, and may include at least one antenna 1801 and a radio frequency unit 1802. Optionally, the AAU 1800 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). An internal processing function that can be implemented by the CU and the DU 1900 corresponds to a function of the processing unit 1501 in FIG. 15. Optionally, the CU and the DU 1900 may control the network device, and may be referred to as controllers. The AAU, the CU, and the DU may be physically arranged together, or may be physically arranged separately.

In addition, the network device is not limited to the form shown in FIG. 17, and may alternatively be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the CU and the DU 1900 may include one or more boards. A plurality of boards may jointly support a radio access network (such as an LTE network) of a single access standard, or may respectively support radio access networks (such as an LTE network, a 5G network, a future network, or another network) with different access standards. The CU and the DU 1900 further include a memory 1901 and a processor 1902. The memory 1901 is configured to store necessary instructions and data. The processor 1902 is configured to control the network device to perform a necessary action, for example, is configured to control the network device to perform an operation procedure related to the network device in the foregoing method embodiments. The memory 1901 and the processor 1902 may serve one or more boards. In other words, a memory and a processor may be disposed on each board. Alternatively, a plurality of boards may share a same memory and a same processor. In addition, a necessary circuit may further be disposed on each board.

It should be understood that the network device 1700 shown in FIG. 17 can implement a function of the network device related in the method embodiments in FIG. 7. Operations and/or functions of units in the network device 1700 are separately intended to implement corresponding procedures performed by the network device in the foregoing method embodiments of this application. To avoid repetition, detailed descriptions are appropriately omitted herein. The structure of the network device shown in FIG. 17 is merely a possible form, but shall not constitute any limitation on embodiments of this application. This application does not exclude a possibility that there may be a network device structure in another form in the future.

The CU and/or the DU 1900 may be configured to perform an action that is described in the foregoing method embodiments and that is implemented inside the network device, and the AAU 1800 may be configured to perform an action of receiving or sending that is described in the foregoing method embodiments and that is performed by the network device from or to the terminal device. For details, refer to the descriptions in the foregoing method embodiments. Details are not described herein again.

An embodiment of this application further provides a communication system. The communication system includes a terminal device and a network device. The terminal device is configured to perform all or some of the steps performed by the terminal device in the embodiment shown in FIG. 7. The network device is configured to perform all or some of the steps performed by the network device in the embodiment shown in FIG. 7.

Based on the foregoing embodiments, embodiments of this application further provide a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware-only embodiments, software-only embodiments, or embodiments combining software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1. A cell identity configuration method, comprising:

   obtaining, by a donor node, a cell identity of a neighboring cell of a current first cell, wherein the first cell is a serving cell of a first integrated access and backhaul IAB node; and

   if determining that a cell identity of the first cell is the same as the cell identity of the neighboring cell, activating, by the donor node, a second cell, and handing over a mobile terminal from the first cell to the second cell, wherein a cell identity of the second cell is different from the cell identity of the neighboring cell, and the second cell is a cell other than the first cell of the first IAB node.

2. The method according to claim 1, wherein that the cell identity of the first cell is the same as the cell identity of the neighboring cell comprises one or more of the following:

   the first cell and the neighboring cell use a same cell identity; or

   a remainder obtained by the cell identity of the first cell modulo N is the same as a remainder obtained by the cell identity of the neighboring cell modulo N, wherein N is 3 or 30.

3. The method according to claim 1 or 2, wherein the cell identity comprises one of the following:
   a physical cell identifier PCI and a cell global identifier CGI.

4. A cell identity configuration method, comprising:

   obtaining, by a first integrated access and backhaul IAB node, a cell identity of a neighboring cell of a current first cell, wherein the first cell is a serving cell of the first IAB node; and
   determining, by the first IAB node, that a cell identity of the first cell is the same as the cell identity of the neighboring cell, and updating the cell identity of the first cell, wherein an updated cell identity of the first cell is different from the cell identity of the neighboring cell.

5. The method according to claim 4, wherein the updating the cell identity of the first cell comprises:

   sending, by the first IAB node, the cell identity of the first cell to a donor node; and
   receiving, by the first IAB node, the updated cell identity of the first cell from the donor node.

6. The method according to claim 4 or 5, wherein that the cell identity of the first cell is the same as the cell identity of the neighboring cell comprises one or more of the following:

   the first cell and the neighboring cell use a same cell identity; or
   a remainder obtained by the cell identity of the first cell modulo N is the same as a remainder obtained by the cell identity of the neighboring cell modulo N, wherein
   N is 3 or 30.

7. The method according to claim 5 or 6, wherein the cell identity comprises one of the following:
   a physical cell identifier PCI and a cell global identifier CGI.

8. A cell identity configuration method, comprising:

   obtaining, by a first integrated access and backhaul IAB node, a correspondence, wherein the correspondence comprises correspondences between different parameter values of a first parameter and different cell identities, and the first parameter comprises at least one of the following: a service area or a service time;
   determining, by the first IAB node, a target parameter value of the first parameter; and
   determining, by the first IAB node, a corresponding target cell identity based on the correspondence and the target parameter value of the first parameter, and configuring the target cell identity for a first cell, wherein the first cell is any cell of the first IAB node.

9. The method according to claim 8, wherein the determining, by the first IAB node, a target parameter value of the first parameter comprises:

   determining, by the first IAB node, a first service area based on a current location of the first IAB node, and using area information of the first service area as the target parameter value of the first parameter; or
   determining, by the first IAB node, a first service time based on a current time, and using the first service time as the target parameter value of the first parameter; or
   determining, by the first IAB node, a second service area based on a current location of the first IAB node, determining a second service time based on a current time, and determining area information of the second service area and the second service time as the target parameter value of the first parameter.

10. The method according to claim 8 or 9, wherein the cell identity comprises one of the following:
    a physical cell identifier PCI and a cell global identifier CGI.

11. A communication apparatus, comprising a functional module for implementing the method according to any one of claims 1 to 3, any one of claims 4 to 7, or any one of claims 8 to 10.

12. A communication apparatus, comprising:

    a transceiver unit, configured to obtain a cell identity of a neighboring cell of a current first cell, wherein the first cell is a serving cell of a first integrated access and backhaul IAB node; and
    a processing unit, configured to: if determining that a cell identity of the first cell is the same as the cell identity of the neighboring cell, activate a second cell, and hand over a mobile terminal from the first cell to the second cell, wherein a cell identity of the second cell is different from the cell identity of the neighboring cell, and the second cell is a cell other than the first cell of the first IAB node.

13. The apparatus according to claim 12, wherein that the cell identity of the first cell is the same as the cell identity of the neighboring cell comprises one or more of the following:

   the first cell and the neighboring cell use a same cell identity; or
   a remainder obtained by the cell identity of the first cell modulo N is the same as a remainder obtained by the cell identity of the neighboring cell modulo N, wherein N is 3 or 30.

14. The method according to claim 12 or 13, wherein the cell identity comprises one of the following:
   a physical cell identifier PCI and a cell global identifier CGI.

15. A communication apparatus, comprising:

   a transceiver unit, configured to obtain a cell identity of a neighboring cell of a current first cell, wherein the first cell is a serving cell of a first IAB node; and
   a processing unit, configured to determine that a cell identity of the first cell is the same as the cell identity of the neighboring cell, and update the cell identity of the first cell, wherein an updated cell identity of the first cell is different from the cell identity of the neighboring cell.

16. The apparatus according to claim 15, wherein the transceiver unit is specifically configured to:

   send the cell identity of the first cell to a donor node; and
   receive the updated cell identity of the first cell from the donor node.

17. The apparatus according to claim 15 or 16, wherein that the cell identity of the first cell is the same as the cell identity of the neighboring cell comprises one or more of the following:

   the first cell and the neighboring cell use a same cell identity; or
   a remainder obtained by the cell identity of the first cell modulo N is the same as a remainder obtained by the cell identity of the neighboring cell modulo N, wherein
   N is 3 or 30.

18. The method according to claim 16 or 17, wherein the cell identity comprises one of the following:
   a physical cell identifier PCI and a cell global identifier CGI.

19. A communication apparatus, comprising:

   a transceiver unit, configured to obtain a correspondence, wherein the correspondence comprises correspondences between different parameter values of a first parameter and different cell identities, and the first parameter comprises at least one of the following: a service area or a service time; and
   a processing unit, configured to: determine a target parameter value of the first parameter; determine a corresponding target cell identity based on the correspondence and the target parameter value of the first parameter; and configure the target cell identity for a first cell, wherein the first cell is any cell of a first IAB node.

20. The apparatus according to claim 19, wherein the processing unit is specifically configured to determine a first service area based on a current location of the first IAB node, and use area information of the first service area as the target parameter value of the first parameter; or

   determine a first service time based on a current time, and use the first service time as the target parameter value of the first parameter; or
   determine a second service area based on a current location of the first IAB node, determine a second service time based on a current time, and determine, by the first IAB node, area information of the second service area and the second service time as the target parameter value of the first parameter.

21. The method according to claim 19 or 20, wherein the cell identity comprises one of the following:
   a physical cell identifier PCI and a cell global identifier CGI.

22. A communication apparatus, comprising at least one processor, wherein the processor is configured to be coupled to a memory; and
the at least one processor is configured to perform a computer program or instructions stored in the memory, to enable the method according to any one of claims 1 to 3, any one of claims 4 to 7, or any one of claims 8 to 10 to be performed.

23. A computer-readable storage medium, wherein the computer-readable storage medium stores instructions, and when the instructions are executed by a computer, the method according to any one of claims 1 to 3, any one of claims 4 to 7, or any one of claims 8 to 10 is performed.

24. A computer program product comprising a computer program or instructions, wherein the method according to any one of claims 1 to 3, any one of claims 4 to 7, or any one of claims 8 to 10 is performed when the computer program product runs on a computer.

Core network
device 110

Radio access
network device
120

Wireless
backhaul device
130

Terminal
device 140

Terminal
device 150

FIG. 1

FIG. 2A

**Terminal**　　　　　　　**IAB node 2**　　　　　　　**IAB node 1**　　　　　　　**IAB donor**

| | DU | MT | DU | MT | DU | | CU-CP |

| | | | | | | | | | | | | | | | | | | |
|---|---|---|---|---|---|---|---|---|
| RRC | | | | | | | | RRC |
| PDCP | | | | | | | | PDCP |
| | | F1AP | | | | | | F1AP |
| | | SCTP | | | | | | SCTP |
| | | IP | | | IP | IP | | IP |
| | | BAP | BAP | BAP | BAP | | | |
| RLC | RLC | RLC | RLC | RLC | RLC | L2 | | L2 |
| MAC | MAC | MAC | MAC | MAC | MAC | | | |
| PHY | PHY | PHY | PHY | PHY | PHY | L1 | | L1 |

SRB　　　　　　　BH RLC CH　　　　　　　BH RLC CH　　　　　　　F1-C

**FIG. 2B**

Backhaul link

Access link

IAB node 5

UE 2

IAB node 2

IAB node 4

UE 1

IAB node 1

IAB donor node

IAB node 3

FIG. 3

FIG. 4A

EP 4 564 912 A1

FIG. 4B

FIG. 5

FIG. 6

FIG. 7

FIG. 8A

FIG. 8B

FIG. 9

| First IAB node | | (Donor) Donor-CU 1 | (Donor) Donor-CU 2 |
|---|---|---|---|
| IAB1-MT | IAB1-DU | | |

Step 1001: Send a migration request message

Step 1002: Return a migration request response message

Step 1003: Send an activation indication message to the IAB1-DU

Step 1004: The (donor) Donor-CU 2 establishes an F1 connection to the first IAB node

FIG. 10

| First IAB node | | (Donor) Donor-CU |
|---|---|---|
| IAB1-MT | IAB1-DU | |

Step 1101: Obtain a cell identity of a neighboring cell of a current first cell

Step 1102A: Determine that a cell identity of the first cell is the same as the cell identity of the neighboring cell, and indicate the IAB1-DU to update the cell identity of the first cell

Step 1102B: Update the cell identity of the first cell

Step 1103A: Send the cell identity of the first cell

Step 1103B: Update the cell identity of the first cell

Step 1103C: Send an updated cell identity of the first cell

FIG. 11

Step 1201: A first IAB node obtains a correspondence, where the correspondence includes correspondences between different parameter values of a first parameter and different cell identities, and the first parameter includes at least one of the following: a service area or a service time

Step 1202: The first IAB node determines a target parameter value of the first parameter

Step 1203: The first IAB node determines a corresponding target cell identity based on the correspondence and the target parameter value of the first parameter, and configures the target cell identity for a first cell, where the first cell is any cell under the first IAB node

FIG. 12

FIG. 13

| IAB-DU | | RIC |
|---|---|---|

Step 1401: Deliver a correspondence to the IAB-DU through an E2 interface, where the correspondence includes correspondences between different parameter values of a first parameter and different cell identities, and the first parameter includes at least one of the following: a service area or a service time

Step 1402: Determine a target parameter value of the first parameter

Step 1403: Determine a corresponding target cell identity based on the correspondence and the target parameter value of the first parameter, and configure the target cell identity for a first cell, where the first cell is any cell under a first IAB node

FIG. 14

Communication apparatus 1500

Transceiver unit 1502

Processing unit 1501

FIG. 15

1600

Antenna

Radio frequency circuit

1610

Memory Processor

1620

Input/Output apparatus

FIG. 16

CU and DU

AAU

Antenna 1801

1802

Radio frequency unit

1800

Board

1901 1902

Memory — Processor

1900

1700

FIG. 17

## INTERNATIONAL SEARCH REPORT

| International application No. |
|---|
| **PCT/CN2023/094350** |

| A. | CLASSIFICATION OF SUBJECT MATTER |
|---|---|

H04W36/00(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, IEEE, 3GPP: 接入回传一体化, 集成接入和回程, 小区标识, 时间, 时段, 区域, 位置, IAB, PCI, CGI, time, frame, range, area, region, location, position

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114223259 A (QUALCOMM INC.) 22 March 2022 (2022-03-22) description, paragraphs [0061]-[0155], and figures 2-3 | 1-3, 11-14, 22-24 |
| X | CN 114270915 A (QUALCOMM INC.) 01 April 2022 (2022-04-01) description, paragraphs [0028]-[0086] | 4-7, 11, 15-18, 22-24 |
| X | CN 114303403 A (QUALCOMM INC.) 08 April 2022 (2022-04-08) description, paragraphs [0054]-[0088] | 8-11, 19-24 |
| X | CN 112996061 A (VIVO MOBILE COMMUNICATION CO., LTD.) 18 June 2021 (2021-06-18) description, paragraphs [0046]-[0093] | 1-3, 11-14, 22-24 |
| A | WO 2022061780 A1 (NOKIA SHANGHAI BELL CO., LTD. et al.) 31 March 2022 (2022-03-31) entire document | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 June 2023** | **07 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094350**

| Patent document cited in search report | | | Publication date (day/month/year) | Patent family member(s) | | | Publication date (day/month/year) |
|---|---|---|---|---|---|---|---|
| CN | 114223259 | A | 22 March 2022 | US | 2021051545 | A1 | 18 February 2021 |
| | | | | EP | 4014570 | A1 | 22 June 2022 |
| | | | | WO | 2021034724 | A1 | 25 February 2021 |
| CN | 114270915 | A | 01 April 2022 | WO | 2021034867 | A1 | 25 February 2021 |
| | | | | US | 2021059015 | A1 | 25 February 2021 |
| | | | | EP | 4018711 | A1 | 29 June 2022 |
| CN | 114303403 | A | 08 April 2022 | WO | 2021034817 | A1 | 25 February 2021 |
| | | | | EP | 4018710 | A1 | 29 June 2022 |
| | | | | US | 2021058854 | A1 | 25 February 2021 |
| CN | 112996061 | A | 18 June 2021 | WO | 2021115414 | A1 | 17 June 2021 |
| | | | | EP | 4075865 | A1 | 19 October 2022 |
| | | | | US | 2022377641 | A1 | 24 November 2022 |
| | | | | JP | 2023503346 | W | 27 January 2023 |
| WO | 2022061780 | A1 | 31 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210911479